# EUROPEAN PATENT APPLICATION

(11) **EP 4 618 283 A1**
(43) Date of publication of application: **17.09.2025**
(21) Application number: 24791818.8
(22) Date of filing: 26.03.2024
(51) Int. Cl.: H01M 50/244, H01M 50/249, H01M 50/271

(54) **BATTERY PACK UPPER COVER, BATTERY PACK, AND VEHICLE**

(30) Priority: 20.04.2023 CN 202320890975 U
(71) Applicant: Eve Energy Co., Ltd., Huizhou, Guangdong 516006 (CN)
(72) Inventor: LI, Wenhang, Huizhou, Guangdong 516006 (CN); LUO, Kun, Huizhou, Guangdong 516006 (CN); CHEN, Chaohai, Huizhou, Guangdong 516006 (CN); CHEN, Zhiwei, Huizhou, Guangdong 516006 (CN); HUANG, Liliang, Huizhou, Guangdong 516006 (CN)
(74) Representative: Berggren Oy
(86) International application number: PCT/CN2024/083775
(87) International publication number: WO 2024/217231

(57) **Abstract**

The present application provides a top cover for a battery pack, a battery pack, and a vehicle. The top cover for the battery pack includes a plurality of cover bodies spliced in a first direction to form a groove, and adjacent two cover bodies are connected by welding. In the processing of the top cover for the battery pack provided in the present application, each cover body is processed first, and then the plurality of cover bodies are welded together, since each cover body has a small volume, a mold used for processing each cover body is small, reducing development difficulty of the mold and investment cost of equipment.

## Description

The present application claims the priority to and benefit of Chinese Patent Application No. 202320890975.0, filed on April 20, 2023, the disclosure of which is incorporated herein by reference in its entirety.

### TECHNICAL FIELD

The present application relates to the field of battery manufacturing, and in particular, to a top cover for a battery pack, a battery pack, and a vehicle.

### BACKGROUND

A battery pack includes a casing for installing a battery module, in which the battery module includes cells, a cooling system, and a control system. Generally, a top cover for the battery pack is an important component in the battery pack.

In related art, the top cover for the battery pack is obtained by stamping a sheet, and a plurality of molds are required during the stamping process. As the number of the cells in the battery pack increases, a size of the battery pack becomes larger, and therefore a size of the top cover for the battery pack is larger, and a mold and specifications of a coiled material required for processing the top cover for the battery pack are larger accordingly. Since the development of a large-scale mold is difficult, the cost of the large-scale mold is high, and the service life of the large-scale mold is low, and conventional coiled materials cannot meet the requirements, and thus, new specifications of coiled materials need to be developed. However, investment cost for the development of new specifications of coiled materials is high, leading to difficult processing and high processing cost of the top cover for the battery pack.

### SUMMARY

Embodiments of the present application provide a top cover for a battery pack, a battery pack, and a vehicle, which can improve the technical problems of difficult processing and high processing cost of the top cover for the battery pack.

In a first aspect, some embodiments of the present application provide a top cover for a battery pack, including:
a plurality of cover bodies, in which the plurality of cover bodies are spliced in a first direction to form a groove, and adjacent two of the plurality of cover bodies are connected by welding.

In a second aspect, some embodiments of the present application provide a battery pack, including:
the top cover for the battery pack as described above; and
a battery pack casing provided with an accommodating space, in which the top cover for the battery pack is fitted to the battery pack casing, and the accommodating space is disposed facing the groove.

In a third aspect, some embodiments of the present application provide a vehicle including the battery pack as described above.

### BENEFICIAL EFFECTS

The present application has the beneficial effects as follows: the top cover for the battery pack is provided by splicing a plurality of cover bodies in a first direction, in which the first direction indicates a length direction or a width direction of the top cover for the battery pack, so that each cover body is processed first and then the plurality of cover bodies are welded together during the processing of the top cover for the battery pack. Since each cover body has a small volume, a mold used for processing each cover body is small, reducing development difficulty and investment cost of the mold, and improving the technical problems of difficult processing and high processing cost of the top cover for the battery pack.

### BRIEF DESCRIPTION OF THE DRAWINGS

FIG. 1 is a schematic three-dimensional diagram of a top cover for a battery pack provided in some embodiments of the present application;
FIG. 2 is an exploded view of the top cover for the battery pack provided in some embodiments of the present application;
FIG. 3 is a top view of the top cover for the battery pack provided in some embodiments of the present application;
FIG. 4 is a partial enlarged view at position A in FIG. 1;
FIG. 5 is a schematic three-dimensional diagram of a battery pack provided in some embodiments of the present application;
FIG. 6 is an exploded view of the battery pack provided in some embodiments of the present application;
FIG. 7 is a schematic three-dimensional diagram of a battery pack casing provided in some embodiments of the present application;
FIG. 8 is an exploded view of the battery pack casing provided in some embodiments of the present application.

Reference characters:
100, cover body; 110, first cover body; 111, first top plate; 1111, first end; 1112, second end; 1113, window; 1114, access port; 112, first side plate; 113, first edge; 114, first mounting hole; 120, second cover body; 121, second top plate; 122, second side plate; 123, second edge; 130, groove; 140, protruding portion; and 141, third mounting hole; and
200, battery pack casing; 210, main body; 220, first end plate; 230, second end plate; 240, accommodating space; 250, third edge; and 251, second mounting hole.

### DETAILED DESCRIPTION

Embodiments of the present application provide a top cover for a battery pack, so as to improve the technical problems of difficult processing and high processing cost of the top cover for the battery pack caused by stamping and integral forming of the top cover for the battery pack.

In some embodiments of the present application, the top cover for the battery pack includes a plurality of cover bodies spliced in a first direction to form a groove, the first direction indicates a length direction or a width direction of the top cover for the battery pack, a first cover body is spliced with a second cover body, and adjacent two cover bodies are connected by welding. During the manufacturing process of the top cover for the battery pack, each cover body is processed first, and then the plurality of cover bodies are welded together. Since each cover body has a small volume, a mold used for processing each cover body is small, reducing development difficulty and investment cost of the mold, and improving reducing the processing cost and processing difficulty of the top cover for the battery pack.

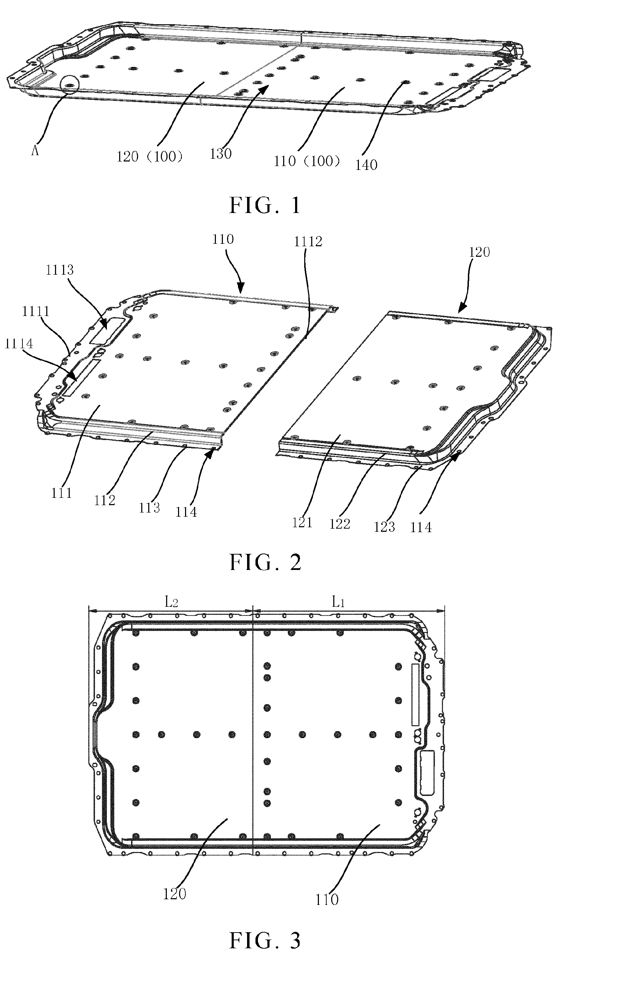

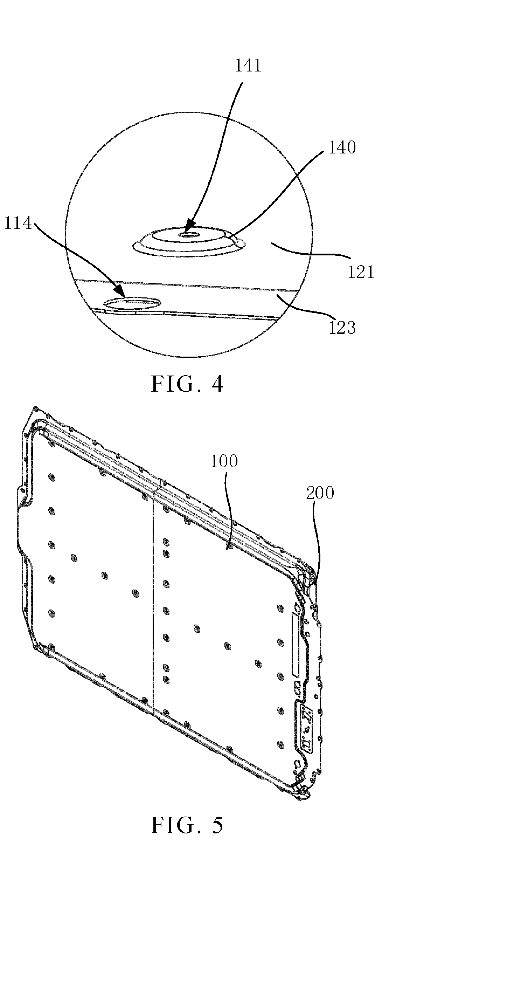

As illustrated in FIGs. 1 to 4, FIG. 1 is a schematic three-dimensional diagram of a top cover for a battery pack provided in some embodiments of the present application, FIG. 2 is an exploded view of the top cover for the battery pack provided in some embodiments of the present application, FIG. 3 is a top view of the top cover for the battery pack provided in some embodiments of the present application, and FIG. 4 is a partial enlarged view at position A in FIG. 1. The top cover for the battery pack includes a plurality of cover bodies 100, and the plurality of cover bodies 100 include a first cover body 110 and a second cover body 120.

In some embodiments, the top cover for the battery pack includes the first cover body 110 and the second cover body 120 that are spliced in the length direction of the top cover for the battery pack, the first cover body 110 and the second cover body 120 are spliced to form a groove 130, and the first cover body 110 and the second cover body 120 are connected by welding. For example, an end of the first cover body 110 is welded to an end of the second cover body 120. In the embodiments, by providing the top cover for the battery pack processed by components, during the processing of the top cover for the battery pack, since the first cover body 110 and the second cover body 120 have smaller sizes, the molds used for processing the first cover body 110 and the second cover body 120 are smaller, reducing the development difficulty and investment cost of the molds, and reducing the processing cost and processing difficulty of the top cover for the battery pack.

In some embodiments, in order to adapt to the processing of different sizes of top cover for the battery packs, the plurality of cover bodies 100 further include at least one middle cover body, the first cover body 110, the middle cover body, and the second cover body 120 are spliced in the length direction of the top cover for the battery pack, and the middle cover body is disposed between the first cover body 110 and the second cover body 120. An end of the middle cover body close to the first cover body 110 and facing away from the second cover body 120 is welded to the first cover body 110, and another end of the middle cover body close to the second cover body 120 and facing away from the first cover body 110 is welded to the second cover body 120. The spliced top cover for the battery pack is provided with the groove 130. The top cover for the battery pack provided in the embodiments can be applied to the processing of various sizes of top cover for the battery packs. Moreover, in the embodiments, the first cover body 110, the second cover body 120, and the middle cover body are individually processed to form the top cover for the battery pack, since the first cover body 110, the second cover body 120, and the middle cover body have smaller sizes, the molds used for processing the first cover body 110, the second cover body 120, and the middle cover body are smaller, reducing the development difficulty and investment cost of the molds, and further reducing the processing cost and processing difficulty of the top cover for the battery pack.

In some embodiments, in order to ensure the structural strength of the splicing portion of the top cover for the battery pack, the first cover body 110 and the second cover body 120 are welded by high-frequency welding. In the present application, the high-frequency welding refers to a new welding process that uses the skin effect and adjacent effect generated by high-frequency current to connect two metal materials together.

It can be understood that, an end of the first cover body 110 and an end of the second cover body 120 are welded by high-frequency welding, the first cover body 110 and the second cover body 120 are welded into an integral structure, and a welding seam at the welding position between the first cover body 110 and the second cover body 120 is flat, so as to ensure flatness of two side surfaces of the top cover for the battery pack. Moreover, the mechanical structural strength of the welding area is better than the property of materials for processing the first cover body 110 and the second cover body 120, so as to increase the structural strength of the top cover for the battery pack. In addition, the high-frequency welding makes the welding area of the top cover for the battery pack have better performances.

In some embodiments, the first cover body 110 and the second cover body 120 are connected by riveting, so as to achieve the splicing of the first cover body 110 and the second cover body 120.

In some embodiments, in order to control the processing cost, the plurality of cover bodies 100 include the first cover body 110 and the second cover body 120, and a ratio of a length of the first cover body 110 to a length of the second cover body 120 is defined as **a,** in which **a** is greater than or equal to 0.8 and less than or equal to 1.4. The length of the first cover body 110 refers to a distance between an edge of a side of the first cover body 110 and an edge of another side of the first cover body 110 in the length direction of the top cover for the battery pack. The length of the second cover body 120 refers to a distance between an edge of a side of the second cover body 120 and an edge of another side of the second cover body 120 in the length direction of the top cover for the battery pack. The length of the first cover body 110 is equal to a width of the second cover body 120. For example, the ratio a of the length of the first cover body 110 to the length of the second cover body 120 is 0.8, 0.9, 1, 1.1, 1.2, 1.3, 1.4, or the like. The welding position between the first cover body 110 and the second cover body 120 is as close as possible to the middle area of the top cover for the battery pack in the length direction of the top cover for the battery pack, so that a high-strength area formed at the welding position is located in the middle area of the top cover for the battery pack, increasing the structural strength of the thinner area of the top cover for the battery pack, and avoiding local deformation of the top cover for the battery pack. Sizes of the first cover body 110 and the second cover body 120 are substantially the same, so that specifications of molds used for processing the first cover body 110 and the second cover body 120 are substantially the same, both of which are smaller, so as to reduce the development cost of the molds and the processing cost of the top cover for the battery pack.

As illustrated in FIG. 3, taking the processing of the top cover for the battery pack with a length of 2122.9 mm and a width of 1442.725 mm as an example, the width of the first cover body 110 and the width of the second cover body 120 are the same as the width of the top cover for the battery pack, both being 1422.725 mm. A length L₁ of the first cover body 110 is 1143.598 mm, a length L₂ of the second cover body 120 is 979.302 mm, and the ratio **a** of the length of the first cover body 110 to the length of the second cover body 120 is 1.167768. The standard specifications of a coil material is 2440 × 1220 mm. In related art, it is not possible to form the top cover for the battery pack using the coil material with the standard specifications by stamping. In the embodiments, the first cover body 110 and the second cover body 120 are formed by stamping, reducing the processes of developing coil materials with new specifications, making it possible to select a suitable sheet from existing specifications, reducing the investment cost in sheets, and reducing the manufacturing cost of the top cover for the battery pack.

In some embodiments, in order to quickly position the first cover body 110 and the second cover body 120, a notch structure is provided at the connection of the first cover body 110 and the second cover body 120, so as to achieve rapid positioning of the first cover body 110 and the second cover body 120.

Referring to FIG. 2, in some embodiments of the present application, the first cover body 110 includes a first top plate 111 and a first side plate 112. The first top plate 111 is a flat plate structure, and the first top plate 111 includes a first end 1111 and a second end 1112 disposed corresponding to each other. The first end 1111 is disposed facing away from the second cover body 120, and the second end 1112 is close to and abutted with the second cover body 120. In the embodiments, the first cover body 110 includes two first side plates 112, and both of the two first side plates 112 are flat plate structures. The two first side plates 112 are arranged at intervals, and the two first side plates 112 are correspondingly and respectively disposed on two side edges of the first top plate 111 between the first end 1111 and the second end 1112. The two first side plates 112 and the first top plate 111 enclose to form a first groove portion of the groove 130. In some embodiments, the first cover body 110 is formed by stamping, simplifying the processes and reducing the processing cost.

Referring to FIG. 2, the second cover body 120 includes a second top plate 121 and a second side plate 122. The second top plate 121 is a flat plate structure, and a width of the second top plate 121 is the same as a width of the first top plate 111. The second top plate 121 includes a first side edge, a second side edge, a third side edge, and a fourth side edge, the first side edge is disposed corresponding to the third side edge, the second side edge is disposed corresponding to the fourth side edge, and the first side edge is abutted with the second end of the first cover body 110. The second side plate 122 is connected to a periphery of the second top plate 121, for example, the second side plate 122 surrounds the second side edge, the third side edge, and the fourth side edge, and parts of the second side plate 122 located on the second side edge and the fourth side edge are abutted with the two first side plates 112, respectively. The second top plate 121 and the second side plate 122 enclose to form a second groove portion of the groove 130 that is communicated with the first groove portion. In some embodiments, the second cover body 120 is formed by stamping, simplifying the processes and reducing the processing cost.

Referring to FIG. 2, in some embodiments, in order to facilitate the assembly of the top cover for the battery pack and other components of the battery pack, such as a battery pack casing 200, the first cover body 110 further includes a first edge 113 provided in a flat plate shape, the first edge 113 is connected to a side of the first side plate 112 facing away from the first top plate 111 and extends outward from the groove 130. The first edge 113 protrudes outward from the first side plate 112, and the first edge 113 is provided with a plurality of first mounting holes 114 arranged at intervals. The first top plate 111 is provided with a plurality of first mounting holes 114 close to the first end 1111 and arranged at intervals. When assembling the top cover for the battery pack and the battery pack casing 200, the top cover for the battery pack is connected to the battery pack casing 200 through the first edge 113 and the first end 1111 of the first top plate 111 by bolts, ensuring the assembling stability of the battery pack and facilitating installation and operation for the users.

In order to facilitate the assembly of the top cover for the battery pack with other components of the battery pack, such as the battery pack casing 200, the second cover body 120 further includes a second edge 123 that is in a flat plate shape, the second edge 123 is connected to a side of the second side plate 122 facing away from the second top plate 121 and extends outward from the groove 130, and the second edge 123 protrudes outward from the second side plate 122. The second edge 123 is provided with a plurality of first mounting holes 114 arranged at intervals, and the second edge 123 is abutted with the first edge 113. When assembling the top cover for the battery pack with the battery pack casing, the top cover for the battery pack is connected to the battery pack casing through the second edge 123 by bolts, ensuring the assembling stability of the battery pack and facilitating installation and operation for the users.

In some embodiments, the first top plate 111 is further provided with a window 1113 close to the first end 1111, the window 1113 is rectangular and located outside the groove 130, and the window 1113 is configured to insert a plug-in component.

In some embodiments, the first top plate 111 is further provided with an access port 1114 close to the first end 1111, the access port 1114 is in a shape of a long strip and located in the groove 130, making it convenient for users to observe the situation inside the battery pack from the access port 1114, and improving the safety of the battery pack.

In some embodiments, both of the first top plate 111 and the second top plate 121 are provided with a plurality of protruding portions 140, the protruding portions 140 protrudes from the groove 130, and each of the protruding portions 140 is provided with a third mounting hole 141.

It can be understood that by providing the first top plate 111 and the second top plate 121 provided with the protruding portions 140, and the protruding portions 140 protruding towards the groove 130, when the top cover for the battery pack is connected to other components by connecting components such as rivets, each rivet penetrates the third mounting hole 141, an end of the rivet is located in a concave portion of each of the protruding portions 140 facing away from the groove 130, and the rivet is flush with an outer surface of the top cover for the battery pack, so that the surface of the top cover for the battery pack is flat and beautiful. Moreover, the setting of the plurality of protruding portions 140 increase the structural strength of the top cover for the battery pack.

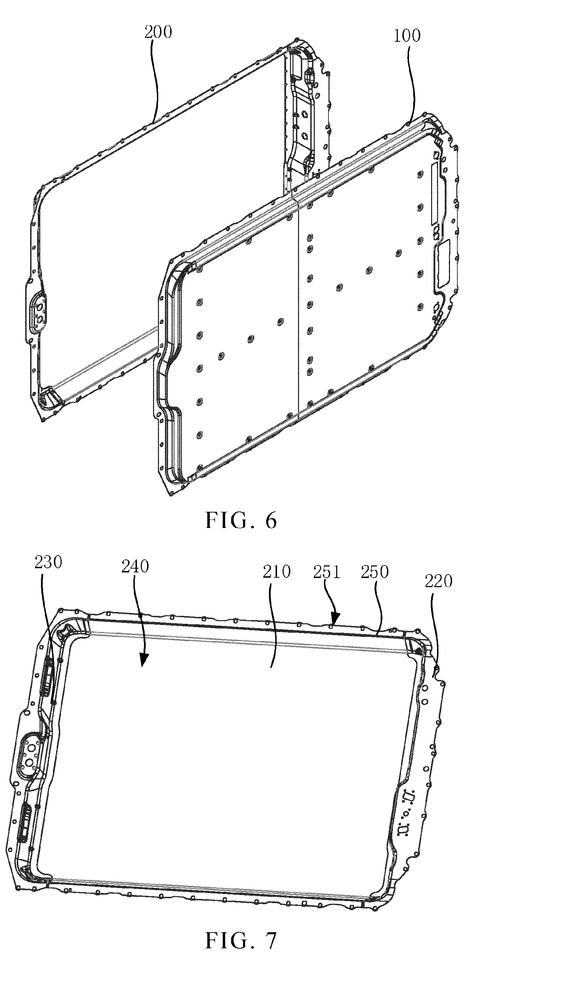

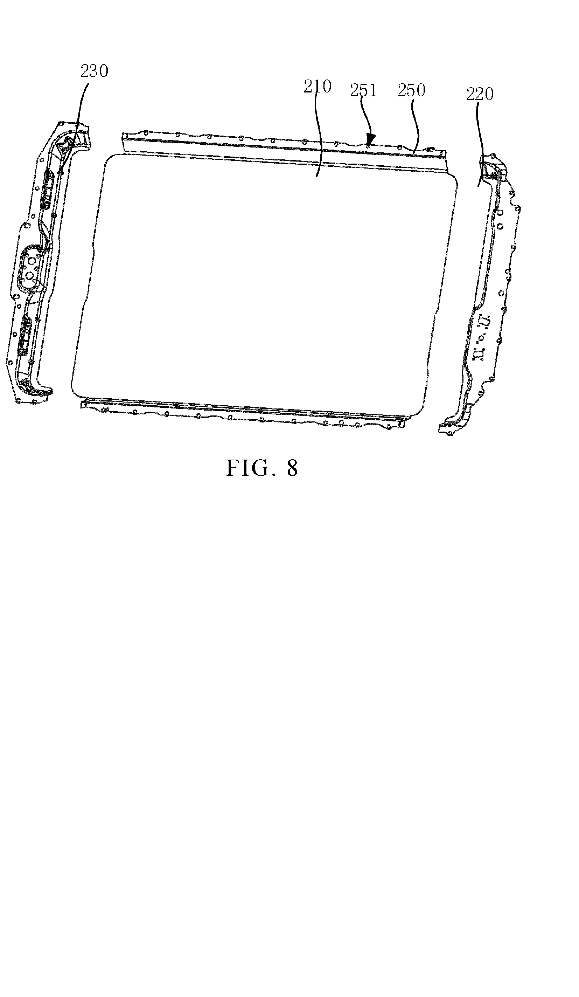

Referring to FIG. 1, FIG. 5, FIG. 6, FIG. 7, and FIG. 8, FIG. 5 is a schematic three-dimensional diagram of a battery pack provided in some embodiments of the present application, FIG. 6 is an exploded view of the battery pack provided in some embodiments of the present application, FIG. 7 is a schematic three-dimensional diagram of a battery pack casing provided in some embodiments of the present application, and FIG. 8 is an exploded view of the battery pack casing provided in some embodiments of the present application.

Some embodiments of the present application further provide a battery pack including the top cover for the battery pack as described in any one of the above embodiments and the battery pack casing 200. The top cover for the battery pack includes the first cover body 110 and the second cover body 120 that are spliced in the length direction of the top cover for the battery pack, the first cover body 110 and the second cover body 120 are spliced to form the groove 130, and the first cover body 110 and the second cover body 120 are welded. For example, an end of the first cover body 110 is welded to an end of the second cover body 120. The battery pack casing 200 is provide with an accommodating space 240, the groove 130 is disposed corresponding to the accommodating space 240, and the top cover for the battery pack is fitted to the battery pack casing 200 to form a closed space for accommodating cells.

In some embodiments, in order to facilitate the processing of the battery pack casing 200, the battery pack casing 200 includes a main body 210, a first end plate 220, and a second end plate 230. The main body 210 is provided as a U-shaped structure, and two openings are respectively provided in two ends of the U-shaped structure. The first end plate 220 is spliced with an end of the main body 210 to cover one of the two openings in one end of the main body 210, and the second end plate 230 is spliced with another end of the main body 210 to cover another of the two openings in another end of the main body 210. The first end plate 220, the main body 210, and the second end plate 230 enclose to form the accommodating space 240 that is configured to accommodate the cells.

During the processing of the battery pack casing 200, the main body 210, the first end plate 220, and the second end plate 230 are processed first, and then the main body 210, the first end plate 220, and the second end plate 230 are spliced together to form a whole. Since each component is individually processed, the size of the mold for processing each component is small, reducing the investment cost of the processing equipment, and reducing the processing cost of the battery pack casing 200.

In some embodiments, the first end plate 220 and the second end plate 230 are connected to the main body 210 by a rivet. The rivet connection has low processing difficulty, increasing the structural strength at the connection position, and improving the overall performance of the battery pack casing.

In some embodiments, in order to facilitate the splicing of the battery pack casing 200 with the top cover for the battery pack, the battery pack casing 200 further includes a third edge 250, the third edge 250 is provided on a side of the first end plate 220, a side of the main body 210, and a side of the second end plate 230 close to the top cover for the battery pack. The third edge 250 is disposed surrounding the accommodating space 240 and extends outward from the accommodating space 240, and the third edge 250 is provide with a plurality of second mounting holes 251.

When assembling the battery pack casing 200 with the top cover for the battery pack, the second mounting holes 251 in the third edge 250 are correspondingly communicated with the first mounting holes 114 in the first edge 113, the first mounting holes 114 in the second edge 123, and the first mounting holes 114 in the first top plate 111 close to the first end 1111, the third edge 250 is in contact with the first edge 113, the second edge 123, and a part of the first top plate 111 close to the first end 1111, and the third edge 250 is fixed to the first edge 113, the second edge 123, and a part of the first top plate 111 close to the first end 1111 by bolts, making it convenient for the operations for the users.

Some embodiments of the present application further provide a vehicle including the battery pack as described in any one of the above embodiments.

In some embodiments of the present application, the battery pack includes cells, the top cover for the battery pack as described in any one of the above embodiments, and the battery pack casing 200. The top cover for the battery pack includes the first cover body 110 and the second cover body 120 that are spliced in the length direction of the top cover for the battery pack, the first cover body 110 and the second cover body 120 are spliced to form the groove 130, and the first cover body 110 and the second cover body 120 are welded. For example, an end of the first cover body 110 is welded to an end of the second cover body 120. The battery pack casing 200 is provided with the accommodating space 240, the groove 130 is disposed corresponding to the accommodating space 240, and the top cover for the battery pack is fitted to the battery pack casing 200 to form a closed space for accommodating the cells.

## Claims

1. A top cover for a battery pack comprising:
a plurality of cover bodies (100), wherein the plurality of cover bodies (100) are spliced in a first direction to form a groove (130), and adjacent two of the plurality of cover bodies (100) are connected by welding.

2. The top cover for the battery pack of claim 1, wherein end portions of the adjacent two of the plurality of cover bodies (100) are welded by high-frequency welding.

3. The top cover for the battery pack of claim 1, wherein the plurality of cover bodies (100) comprise a first cover body (110) and a second cover body (120), and the first cover body (110) comprises:
a first top plate (111) comprising a first end (1111) and a second end (1112), wherein the second end (1112) is closer to the second cover body (120) than the first end (1111), and the second end (1112) is connected to the second cover body (120); and
two first side plates (112) disposed on two sides of the first top plate (111), respectively, wherein an end of each of the two first side plates (112) is abutted with the second cover body (120).

4. The top cover for the battery pack of claim 3, wherein the first cover body (110) further comprises a first edge (113) connected to a side of the first side plate (112) facing away from the first top plate (111), and the first edge (113) is provided with a plurality of first mounting holes (114); and/or,
the first top plate (111) is provided with a plurality of first mounting holes (114) close to the first end (1111).

5. The top cover for the battery pack of claim 3, wherein the first top plate (111) is provided with a window (1113) close to the first end (1111); and/or,
the first top plate (111) is provided with an access port (1114) close to the first end (1111).

6. The top cover for the battery pack of any one of claims 3 to 5, wherein the second cover body (120) comprises:
a second top plate (121) abutted with the second end (1112) of the first top plate (111); and
a second side plate (122) connected to a periphery of the second top plate (121) and abutted with the first side plate (112).

7. The top cover for the battery pack of claim 6, wherein the second cover body (120) further comprises a second edge (123) connected to a side of the second side plate (122) facing away from the second top plate (121), and the second edge (123) is provided with a plurality of first mounting holes (114).

8. The top cover for the battery pack of claim 6, wherein both of the first top plate (111) and the second top plate (121) are provided with a plurality of protruding portions (140) protruding towards the groove (130), and each of the protruding portions (140) is provided with a third mounting hole (141).

9. The top cover for the battery pack of any one of claims 1 to 5, 7, and 8, wherein the plurality of cover bodies (100) comprises a first cover body (110) and a second cover body (120), a ratio of a length of the first cover body (110) to a length of the second cover body (120) is defined as **a,** and **a** is greater than or equal to 0.8 and less than or equal to 1.4.

10. A battery pack comprising:
the top cover for the battery pack as claimed in any one of claims 1 to 9; and
a battery pack casing (200) provided with an accommodating space (240), wherein the top cover for the battery pack is fitted to the battery pack casing (200), and the accommodating space (240) is disposed facing the groove (130).

11. The battery pack of claim 10, wherein the battery pack casing (200) comprises:
a main body (210) provided as a U-shaped structure, wherein two openings are respectively provided in two ends of the U-shaped structure;
a first end plate (220) spliced with one end of the main body (210) to cover one of the two openings in the one end of the main body (210); and
a second end plate (230) spliced with another end of the main body (210) to cover another of the two openings in the another end of the main body (210), wherein the first end plate (220), the main body (210), and the second end plate (230) enclose to form the accommodating space (240).

12. The battery pack of claim 11, wherein the first end plate (220) and the second end plate (230) are connected to the main body (210) by a rivet, respectively.

13. The battery pack of claim 11, wherein the battery pack casing (200) further comprises a third edge (250) disposed on a side of the first end plate (220), a side of the main body (210), and a side of the second end plate (230) close to the top cover for the battery pack, the third edge (250) is disposed surrounding the accommodating space (240) and extends outward from the accommodating space (240), and the third edge (250) is provided with a plurality of second mounting holes (251).

14. A vehicle comprising the battery pack as claimed in any one of claims 10 to 13.
